# EUROPEAN PATENT SPECIFICATION

(11) **EP 2 043 883 B1**
(45) Date of publication and mention of the grant of the patent: **27.06.2012**
(21) Application number: 07768904.0
(22) Date of filing: 10.07.2007
(51) Int. Cl.: B60D 1/52, B60D 1/06

(54) **COUPLING ASSEMBLY FOR A VEHICLE**
VERBINDUNGSANORDNUNG FÜR EIN FAHRZEUG
ENSEMBLE DE COUPLAGE POUR UN VEHICULE

(30) Priority: 10.07.2006 NL 1032141
(43) Date of publication of application: 08.04.2009
(73) Proprietor: Thule Towing Systems B.V., 7951 CX Staphorst (NL)
(72) Inventor: MARGADANT, Arnoud, Philip, Daan, NL-7948 LR Nijeveen (NL); EISING, Frederik, Jacob, NL-9433 PM Zwiggelte (NL); BORGONJE, Christian, Frans, NL-8141 VB Heino (NL)
(74) Representative: Bras, Pieter
(86) International application number: PCT/NL2007/000175
(87) International publication number: WO 2008/007950

(56) References cited:
- EP-A- 0 934 838
- EP-A- 1 526 010
- EP-A1- 0 223 996
- DE-U1- 8 813 812
- DE-U1- 8 907 012

## Description

### BACKGROUND OF THE INVENTION

The invention relates to a coupling assembly for a vehicle, comprising a first coupling member provided with a connection part for a trailer or an accessory, and a second coupling member with which the first coupling member can be detachably coupled. An example of such a coupling assembly is a detachable tow hitch for a car. EP-A-1.526.010 discloses a tow hitch according to the preamble of claim 1.

The detachable tow hitch known from EP-A-1.526.010 can be inserted into a tubular holder that is attached to the rear of the car. By carrying out a tilting motion with respect to the holder a locking is thus activated, as a result of which the tow hitch is secured in the holder. When said tilting motion is not carried out or incorrectly so, or when the locking has already been activated prior to inserting the tow hitch, the tow hitch will nonetheless remain in the holder. As a result the user will erroneously conclude that the tow hitch has been secured. This is a deceptive locking. As a result the tow hitch and therefore a trailer may inadvertently get detached during driving.

The detachable tow hitches having a coupling mechanism according to the Dickmann principle, such as for instance shown in G 89.07012U1, G 88.13812.7 or EP 0.223.996, have a tubular holder in which an insertion member of the detachable tow hitch is inserted. The bottom wall of the holder supports the insertion member during the insertion motion, so that a transverse pin of the insertion member falls exactly in openings in the side walls of the holder in order to ensure the coupling. Because of the support the impression may be given that the tow hitch is secured, whereas this may not necessarily be the case.

It is an object of the invention to provide a coupling assembly as stated above, of which an incomplete coupling between the members can be counteracted.

It is an object of the invention to provide a coupling assembly as stated above, of which an incomplete coupling between the members can be established clearly.

It is an object of the invention to provide a coupling assembly as stated above, of which an incomplete coupling between the members can be felt by hand.

### SUMMARY OF THE INVENTION

The invention provides a coupling assembly for a vehicle according to claim 1.

Preferably the second boundary defines an end face of the second coupling member situated along the access opening, and in the direction of the first centre line in the coupling position towards the vehicle, wherein the first boundary is situated offset with respect to said end face.

Due to the offset position of the first boundary at the lower side of the socket a certain downwardly oriented freedom of movement can be formed for the insertion end. The insertion end getting out of the socket can thus be enhanced. The instability of the insertion end in the socket can therefore be increased. The first coupling member can as a result drop out of the socket of its own accord, for instance under its own weight, when the insertion end has been incorrectly inserted into the socket. An additional advantage may be that the first coupling member can remain movable in the user's hand until the insertion end has correctly been inserted into the socket for entering the coupling. The user of the tow hitch assembly can as a result feel whether the first coupling member is correctly installed.

The said particular effect of achieving instability is particularly achieved when in the direction of the first centre line in the coupling position, at least a part of the first boundary is situated offset from the second boundary or end face over a distance that is at least 1/4, preferably at least 1/3 of the vertical thickness of the insertion end in the coupling position at the location of the accommodation opening. In an actual embodiment thereof the first boundary is situated offset from the second boundary or end face over a distance of at least 15 millimetres.

The first coupling member can remain in the hand of the user so as to be perceptibly movable, until the insertion end has been correctly inserted into the socket when the first boundary in the direction transverse to the first centre line in the coupling position, in the coupling position is spaced apart from the insertion end over a distance that is at least 1/15, preferably at least 1/10 of the vertical thickness of the insertion end in the coupling position at the location of the accommodation opening. In an actual embodiment thereof the first boundary in the direction transverse to the first centre line in the coupling position, in the coupling position is spaced apart from the insertion end over a distance of at least 4 millimetres.

When the first boundary in the coupling position is spaced apart from the insertion end, wherein the first boundary allows a swinging motion of the first coupling member with respect to the second coupling member with an angle between the first centre line in the coupling position and the first centre line in the swinging position of at least 20 degrees, preferably at least 30 degrees, the unstable first coupling member after said swinging motion will be able to tilt through due to gravity and drop out of the second coupling member. The first boundary can thus ensure the tilting point for the unstable first coupling member.

In an embodiment the first coupling member comprises first coupling means situated offset opposite the insertion direction and having a first abutment surface, and the second coupling member comprises second coupling means having a second abutment surface located at the access opening for cooperation with the first abutment surface, wherein in the mounted condition of the second coupling member to the vehicle the first boundary with respect to the second abutment surface in the direction of the first centre line in the coupling position is situated offset towards the vehicle.

Due to the offset position of the first boundary at the lower side of the socket as described above, a certain downwardly oriented freedom of movement can be formed for the insertion end. The insertion end getting out of the socket can thus be enhanced.

If at least a part of the first boundary in the direction of the first centre line in the coupling position is situated entirely beyond the second abutment surface, a considerable weight reduction can be achieved whereas this need not be detrimental to the strength of the socket.

In a combined embodiment the first boundary in the coupling position is spaced apart from the insertion end, wherein the first boundary allows a swinging motion of the first coupling member with respect to the second coupling member with the first coupling means moving according to a straight path extending substantially transverse to the first centre line in the coupling position. Because of the permitted straight path located at the first coupling means, the first coupling member dropping out due to the effect of gravity can be enhanced. In one embodiment there is contact between first and second coupling means over at least a part of the straight path. Dropping out due to the effect of gravity therefore can even take place when the first and second coupling members have already approached each other in order to start cooperating.

Preferably the first boundary extends between two side walls of the socket, wherein the first boundary is situated further offset in the middle than at the side walls of the socket, wherein preferably because of a bent or curved edge of the socket the first boundary is situated further offset in the middle than at the side walls of the socket. Due to the offset position in the middle or in a vertical plane through the middle of the socket the insertion end is able to get sufficient freedom of movement at its lower side in order to slide out of the socket in case of an incomplete coupling. The sliding can be particularly enhanced when the shape of the bent or curved edge has a relation in shape with a curve of the insertion end in a cross-section transverse to the first centre line.

In one embodiment the socket comprises a bottom wall defining the first boundary. The bottom wall may contribute to the strength of the socket.

In an embodiment the first coupling member comprises first coupling means situated offset opposite the insertion direction and having a first abutment surface, and the second coupling member comprises second coupling means having a second abutment surface located at the access opening for cooperation with the first abutment surface, wherein the first coupling member furthermore comprises third coupling means situated at the insertion end and having a third abutment surface, and the second coupling member comprises fourth coupling means having a fourth abutment surface for cooperation with the third abutment surface, wherein the first abutment surface comprises a first curve or buckle which defines a section of the first abutment surface which in downward direction is situated farthest from the first centre line in the coupling position, the second abutment surface comprises a second curve or buckle which at a free end of the second coupling means defines a section which in upward direction is situated closest to the first centre line in the coupling position, the third abutment surface comprises a third curve or buckle which defines a section of the third abutment surface which in upward direction is situated farthest from the first centre line in the coupling position, and the fourth abutment surface comprises a fourth curve or buckle which comprises a section of the fourth abutment surface that is situated closest to the first centre line in the coupling position, wherein the distance between the first and the third curve or buckle is adapted to the distance between the second and fourth curve or buckle for a stable support of the first coupling member until reaching a stand-by position preceding the coupling position over a stable insertion track having a length of one or a few millimetres.

When making the insertion motion with the first coupling member, the user is able to let the first abutment surface rest on the second abutment surface, as a result of which due to a slight reciprocal movement over the curves or buckles a stroke that goes up and down can be felt, from which it can be concluded that a full coupling position has not yet been reached.

In an embodiment the first coupling member comprises third coupling means situated at the insertion end and having a third abutment surface, and the second coupling member comprises fourth coupling means having a fourth abutment surface for cooperation with the third abutment surface, wherein the third abutment surface with respect to the first centre line comprises a first surface section sloping upwards in insertion direction, which surface section over a third curve or buckle merges into a second surface section sloping diagonally downwards in insertion direction.

Due to its downwardly sloping position the second surface section may abut an inner wall of the socket. Such a surface contact has relatively low friction, as a result of which the insertion end and thus the first coupling member sliding back out of the socket in case of an incomplete coupling can be enhanced. The user can clearly perceive that the coupling was not successful.

In one embodiment thereof the first diagonally upwardly sloping surface section and the second diagonally downwardly sloping surface section have a comparable length in the direction of the first centre line.

In a relatively easy to manufacture embodiment the diagonally downwardly sloping surface section is substantially straight and has a length that is at least five times larger than the radius of the third curve.

Alternatively formulated the second diagonally downwardly sloping surface section is substantially straight and has a length that is at least five times larger than the distance between the transitions from the first surface section and the second surface section to the third curve. It is noted that tow hitches having a coupling mechanism according to the Dickmann principle do not have such a downwardly sloping surface consecutive to a curve.

In one embodiment the second surface section is substantially straight and is at an angle of 25-35 degrees to the first centre line. In case of a substantially straight socket said angle enhances a sliding motion of up to over 35 degrees, after which the first coupling member drops out of the socket as if of its own accord due to gravity.

In an embodiment the coupling members have been provided with coupling means that are adapted for in the mounted condition of the second coupling member to the vehicle due to gravity letting the insertion end of the first coupling member drop out of the socket over a slide track in case of incomplete locking of the coupling members. The possibility of dropping out of the socket due to gravity provides a clearly perceivable signal that the first coupling member is incorrectly coupled with the second coupling member. When the user still has the first coupling member in his hand, he can feel an expelling force from which it can be concluded that an operation error has been made.

The first coupling member can be inserted with oversight with its insertion end horizontally or diagonally downwards into the socket of the second coupling member under the bumper of a vehicle, when the socket has a second centre line which in coupled condition of the first and second coupling member substantially coincides with the first centre line, wherein in mounted condition of the second coupling member to the vehicle the second centre line in insertion direction is oriented horizontally or diagonally downward. Due to the enhancement of the first coupling member's getting out of the socket according to one or several measures according to the invention, said orientation can be applied wherein it is clearly perceivable that the coupling is unsuccessful.

Alternatively the socket has a second centre line which in coupled condition of the first and second coupling member substantially coincides with the first centre line, wherein in mounted condition of the second coupling member to the vehicle the second centre line in insertion direction is oriented diagonally upward.

Preferably the second centre line with respect to a horizontal surface is oriented over an angle range of 0-30 degrees.

Preferably the first and second coupling means have been formed for together providing a slide bearing and/or rotary bearing over an insertion track of the first coupling member.

A certain form-closed interengagement between the first and second coupling means during the insertion motion can be achieved when the first coupling means have been formed having a horizontally projecting round pin, wherein the second abutment surface defines a centric rotary section and merges into a surface section for the pin that diverges or runs away from said centric rotary section.

The rod-shaped insertion end may comprise a longitudinal bore, and a coupling rod slidable therein up to the coupling position and having a coupling head in the extended position extending out of the end of the longitudinal bore for in the coupling position retaining the first and second coupling means in coupling cooperation, wherein the third and the fourth coupling means have been formed for interengagement in the coupling position and furthermore have been formed for supporting interengagement in a stand-by position, wherein the coupling rod is still at a distance in the insertion direction before the coupling position.

The first and second coupling means can be brought and kept in cooperation due to wedge action when the third and fourth coupling means comprise cooperating third and fourth abutment surfaces, wherein the third and fourth abutment surfaces comprise a surface section facing against the insertion direction and a surface section facing towards the insertion direction, preferably facing diagonally, respectively.

The third and fourth abutment surfaces may comprise distinctive surface sections for engagement in the stand-by position and engagement in the coupling position, wherein the distinctive surface sections preferably are at an angle to each other.

In a further development the rod-shaped insertion end comprises a longitudinal bore and a coupling rod slidable therein up to the coupling position and having a coupling head in the extended position extending out of the end of the longitudinal bore, for in the coupling position retaining the first and second coupling means in coupling cooperation, wherein the coupling head at an end face forms a fifth abutment surface, wherein the second coupling member has been provided with a sixth abutment surface spaced apart from the insertion end, which sixth abutment surface in a stand-by position, in which the coupling rod is still at a distance in the insertion direction before the coupling position, is in engagement with the fifth abutment surface, wherein the fifth and sixth abutment surface preferably are almost perpendicular to or recede from the insertion direction. Due to the displacement for instance a trigger mechanism in the first coupling member can be activated for bringing the coupling rod in the extended position.

In one embodiment of such a trigger mechanism the first coupling member is provided with retaining means for retaining the coupling rod in the inserted condition in the bore, which retaining means can be deactivated by an insertion motion of the coupling rod, wherein the fifth abutment surface is placed for in case of displacement of the first coupling member from the stand-by position to the coupling position pushing in the fifth abutment surface and thus the coupling rod towards the coupling position counter a biassing stress.

In one embodiment the sixth abutment surface is positioned with respect to the fourth coupling means, and the fifth abutment surface in the extended coupling position of the coupling rod is positioned with respect to the third coupling means for keeping the third and fourth coupling means beyond supporting interengagement when inserting the insertion member in the accommodation member with the coupling rod in the extended position.

Preferably the coupling rod in the extended coupling position can then be pushed in counter the biassing stress over a bounded safety track or wear track, wherein the sixth abutment surface is positioned with respect to the fourth coupling means, and the fifth abutment surface in the extended coupling position of the coupling rod is positioned with respect to the third coupling means for in the safety track keeping the third and fourth coupling means beyond the supporting interengagement when inserting the insertion member in the accommodation member with the coupling rod in the extended position. When inserting the first coupling member with the coupling rod inadvertently in the coupling position already, the first coupling member will immediately get detached from the second coupling member.

At the lower side the coupling head preferably is provided with a first coupling surface and wherein the sixth abutment surface merges into a second coupling surface, which in the coupling position cooperates with the first coupling surface.

The invention furthermore relates to a vehicle provided with the first and/or second coupling member of the coupling assembly according to the invention.

The aspects and measures described in this description and claims of the application and/or shown in the drawings of this application may where possible also be used individually. Said individual aspects may be the subject of divisional patent applications relating thereto. This applies in particular to the measures and aspects described per se in the sub claims.

### SHORT DESCRIPTION OF THE DRAWINGS

The invention will be elucidated on the basis of a number of exemplary embodiments shown in the attached drawings, in which:
Figures 1 A and 1 B show a side view of a coupling assembly according to the invention and a schematic, partially cut-away cross-section of the insertion-/accommodation end thereof, respectively, in a first stage of coupling;
Figure 1 C shows a partially cut-away top view of the accommodation end of the coupling assembly according to figures 1 A and 1 B;
Figures 2A and 2B show a side view of the coupling assembly according to the preceding figures and a schematic, partially cut-away cross-section of the insertion-/accommodation end thereof, respectively, during an intermediate stage of coupling;
Figures 3A and 3B show a side view of the coupling assembly according to the preceding figures and a schematic, partially cut-away cross-section of the insertion-/accommodation end thereof, respectively, at completed coupling;
Figures 4A and 4B, 5A and 5B, 6A and 6B, 7A and 7B show side views of the coupling assembly according to the preceding figures and schematic, partially cut-away cross-sections of the insertion-/accommodation ends thereof, in a number of unstable, uncoupled mutual positions.

### DETAILED DESCRIPTION OF THE DRAWINGS

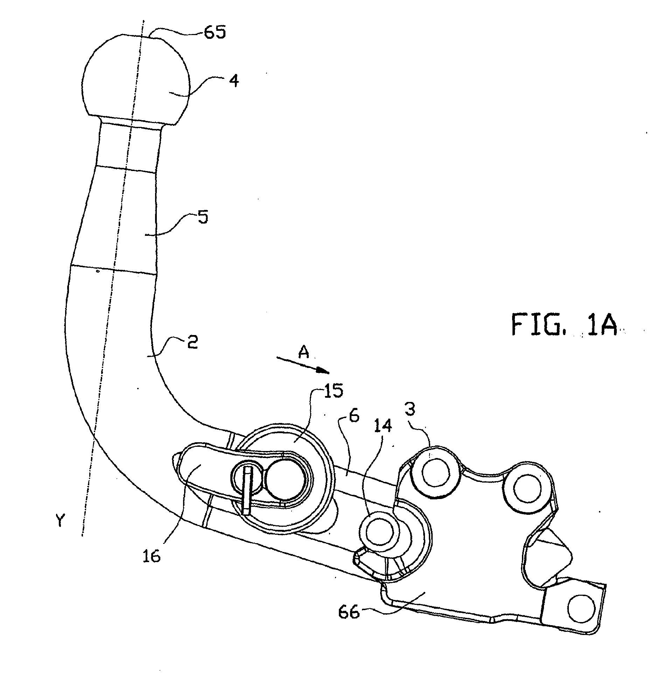

Figure 1A shows an exemplary embodiment of a coupling assembly 1 according to the invention, comprising a tow hitch member 2 and an accommodation member 3. The tow hitch member 2 comprises a ball 4, a neck 5 and a tow hitch rod 6 intended to be accommodated in the accommodation member 3.

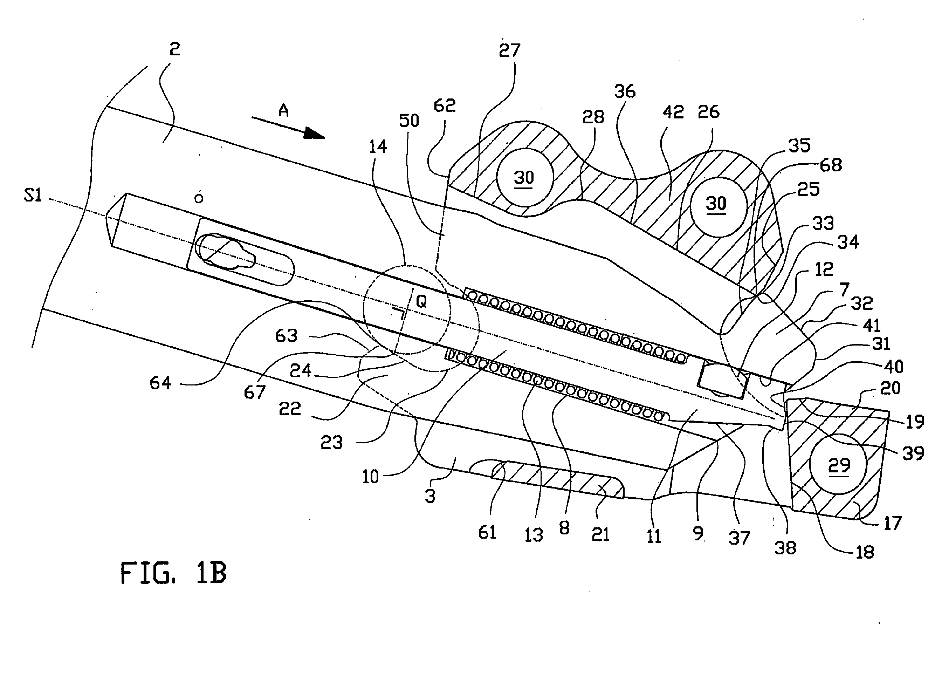

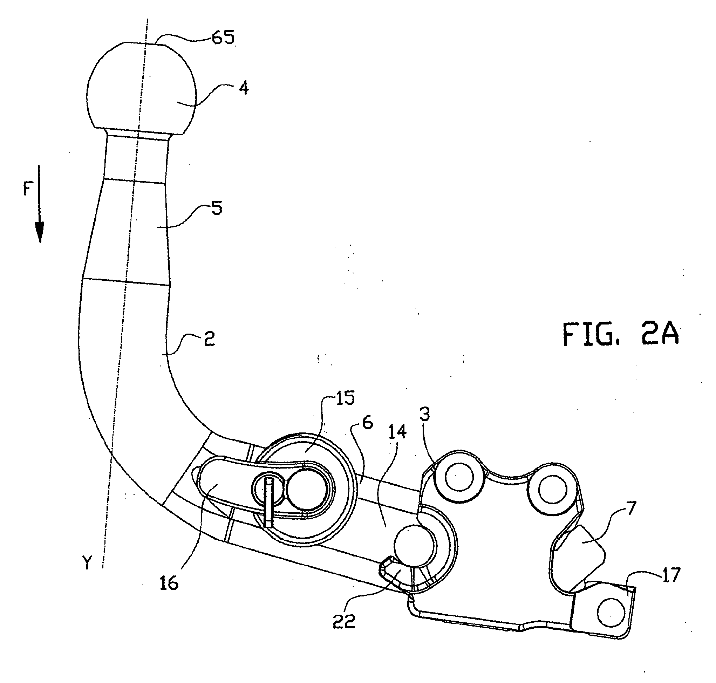

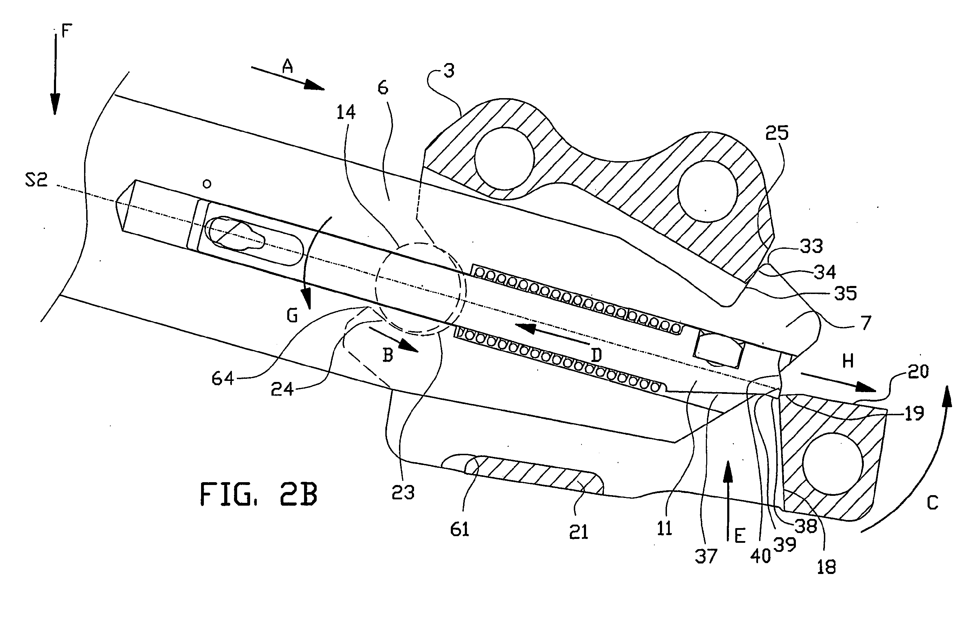

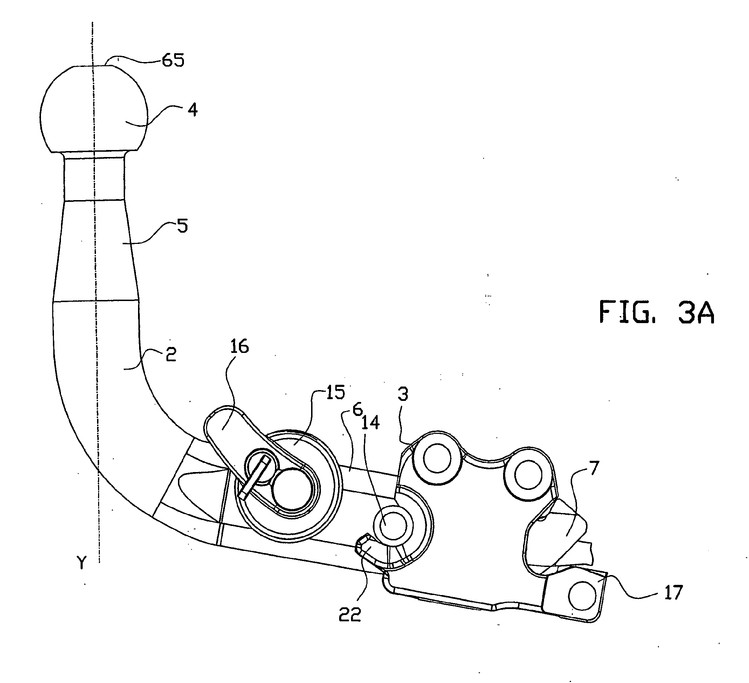

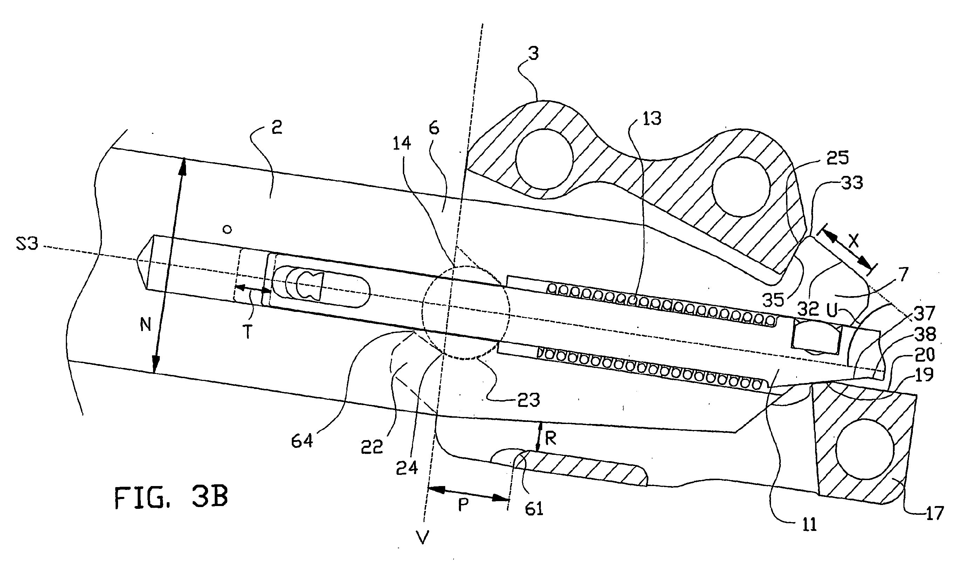

In figure 1B and the consecutive figures 2B, 3B, 4B, 5B, 6B, and 7B only the cross-section of the accommodation member 3 is hatched for the sake of clarity of the figures. The accommodation member 3 forms a tubular accommodation space for accommodation of the insertion end 7 (shown in a cut-away manner) of the tow hitch rod 6. The accommodation member 3 is intended to be fixedly mounted to the rear side of a vehicle, just below or behind the rear bumper, such that it is concealed. The accommodation member 3 is oriented such with respect to the vehicle that in fully inserted and coupled condition, as shown in figures 3A and 3B, the centre line Y of the neck 5 behind the ball 4 is substantially vertical. In this position the flat upper surface 65 of the hitch ball 4 is oriented horizontally.

Depending on the mounting space underneath a vehicle, the shown coupling assembly 1 can be used, or an alternative coupling assembly according to the invention, such that the accommodation member is fully concealed behind the bumper, and the length of the tow hitch rod and the angle of the bend are designed for in fully inserted and coupled condition orient the centre line Y of the neck substantially vertically. The tilting of the accommodation member with respect to the vehicle depends on the angle of the bend. In the shown example the tow hitch member 2 is inserted diagonally downward into the accommodation member and the accommodation member 3 is tilted forward. In an alternative tow hitch member having a larger bend, the tow hitch member even needs to be inserted slightly diagonally upwards in the direction of the bumper. The accommodation member is then forwardly and upwardly oriented. Again alternatively the accommodation member is oriented horizontally, wherein the tow hitch member is inserted horizontally.

The coupling members of the coupling assembly 1 shown may alternatively form a part of an accessory that can be coupled to the vehicle, such as a bike rack. In that case the insertion end 7 projects from the bike rack in order to be inserted into the accommodation member 3.

The tow hitch member 2 is provided with a turning knob 15 having hand engagement part 16, for movement of a coupling rod 10. The coupling rod 10 is accommodated in a bore 8 through the insertion end 7 so as to be slidable along the centre line S of the insertion end 7 (S1 - S7 in various orientations with respect to the accommodation member 3). The coupling rod 10 is provided with a coupling head 11 projecting from end opening 9 of bore 8, and in the insertion direction A is biassed by means of a helical spring 13 placed around the coupling rod 10 and in the bore 8. At its lower side the coupling head 11 is provided with a diagonally upwardly sloping surface or coupling surface 37, and contiguous thereto locking surface 38 that is at an obtuse angle thereto, subsequently a nose surface 39 that is at an angle of 90 degrees thereto and inclines forward and upward with respect to the centre line S, then an abutment surface 40 (fifth abutment surface) that is at an obtuse angle thereto, which surface with respect to the centre line S inclines rearward and upward or recedes, and an upper wall 41 that abuts the inner wall of the bore 8. In the upper wall 41 a plastic insert piece 1 2 is accommodated for engagement onto the wall of the bore 8.

The insertion end 7 is furthermore provided with abutment pins 14 projecting sideward on both sides, which pins have a circle cylindrical outer wall (first coupling means, first curve or buckle) of which the centre line extends through the centre line S of the tow hitch rod 6. At the upper side, above the opening 9 of the bore 8, the insertion end 7 is provided with a bevelling 31, a diagonally inclined surface 32 consecutive thereto in upward direction and immediately merging into an upper curve 33 (third coupling means), a short abutment surface 34 (third coupling means, third curve or buckle) consecutive thereto running diagonally rearward and downward and via a slight buckle merging into a longer steeper abutment surface 35 (third coupling means) declining downward and rearward, which together with a surface 36 that is substantially perpendicular thereto forms a recess 51 in the upper side of the insertion end 7.

The tow hitch member 2 is made of a rough metal bar having a substantially round or oval-round cross-section, in which by bending the bend is formed in the tow hitch rod 6, the sides of the bar are provided with parallel side surfaces, and the diagonal (abutment) surfaces 32, 34, 35 are formed by a machining after treatment. Said surfaces are machined surfaces as a result.

As shown in figure 3B the diagonally inclined surface 32 has a length X that is at least five times larger than the radius of the upper curve 33. Alternatively defined the length X is at least five times larger than the distance between the transitions from the abutment surface 34 and the inclined surface 32 to the upper curve 33. The inclined surface 32 is at an angle U of 25-35 degrees, in this example 30 degrees to the centre line S of the insertion end.

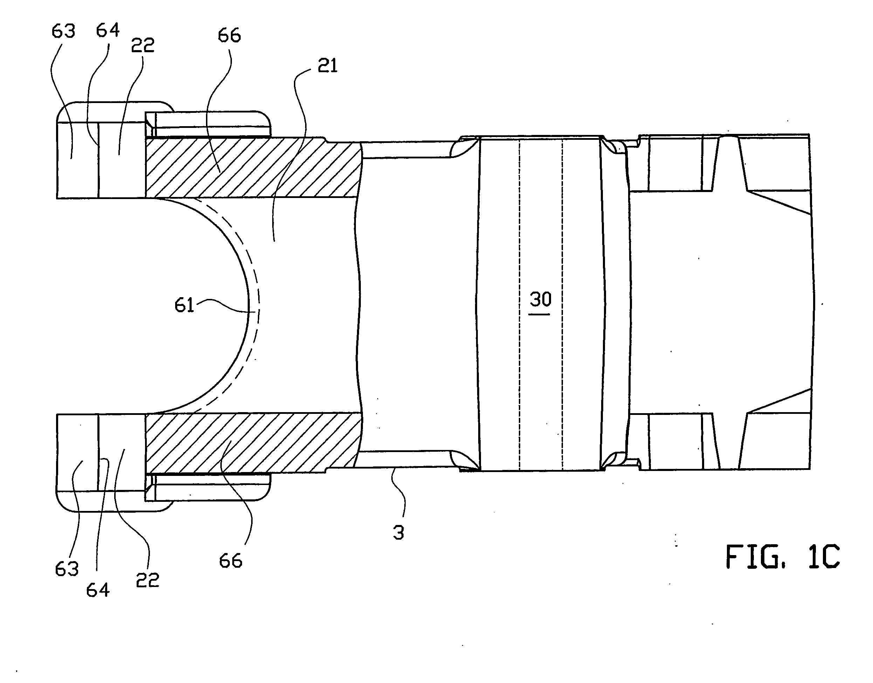

The accommodation member 3 is shown more elaborately in figures 1 B and 1C. As reference for the orientation of the surfaces of the accommodation member 3 described below, the centre line S3 in case of completed coupling is used as shown in figure 3B. The centre line S3 in this position equals the centre line of the accommodation member 3.

The accommodation member 3 is substantially tubular, albeit with interruptions in the bottom wall, for reasons of weight reduction. Thus a transverse part 21 is present at the lower side, which transverse part with upper wall 42 and side walls 66 of the accommodation member 3 defines an insertion opening 50 for the insertion end 7, and at the lower side of the accommodation member 3, spaced apart in (forward) insertion direction A, a transverse beam 17 is provided, which is provided with a bore 29 for weight reduction.

The upper wall 42 is provided with two transverse through bores 30 for mounting the accommodation member 3 to the vehicle. At the lower side, starting at the front surface 62 (second boundary) that is situated along the insertion opening 50, the upper wall 42 is provided with a guide surface 27 that diagonally declines with respect to the centre line S3, subsequently with a concave/convex guide surface 28, and subsequently with a straight diagonally inclining guide surface 26. The upper wall 42 ends in a diagonally upwardly/forwardly extending abutment surface 25 (fourth coupling means) that is more or less perpendicular to the surface 26. Said surfaces 25, 26 merge into each other via a curve 68 (fourth coupling means, fourth curve or buckle).

The transverse beam 17 comprises an abutment surface 18 (sixth abutment surface) that diagonally recedes with respect to the centre line S3, and which via an almost right angle merges into a coupling surface 19, which via a slight angle merges into an end surface 20. In figures 1A and 1B the surfaces 18 and 40 are at least substantially parallel.

Near the insertion opening 50 the accommodation member 3 is provided with bearing members 22 (second coupling means), having a circular abutment edge or support surface 23, smoothly contiguous thereto a straight support surface 24, which, considered in the insertion direction A, declines with respect to the centre line S3, and a slide-off surface 63 which over a curve 64 (second coupling means, second curve or buckle) merges into the straight support surface 24 and which, considered in the insertion direction A, inclines upwardly with respect to the centre line S3. In an alternative embodiment that is not shown, the slide-off surface 63 is designed like a surface oriented transverse to the centre line S3, which at the end at the location of the curve 64 merges into the straight support surface 24. In yet a further alternative embodiment the straight support surface 24 extends further in its plane, opposite the insertion direction A, wherein the slide-off surface 63 defines an end surface of the bearing part oriented transverse to the centre line S3 and merging over a comparable curve into the extended support surface 24.

The transverse part 21 in the direction of the centre line S of the tow hitch rod 6 and the coupling rod 10, in case of completed coupling, is fully offset with respect to the front surface 62 and the circular abutment edges 23. The front surface 62 together with the side walls 66 defines and end surface V of the accommodation member 3. The side edge 61 (first boundary) of the transverse part 21 that faces the insertion side has a curve as a result of which the middle of the transverse part 21 is offset further than at the side walls 66 of the accommodation member 3, over a distance that is at least 1/3 of the vertical thickness N of the insertion end 7 at the location of the abutment pins 14. In this example the vertical thickness is 45 millimetres, and the middle of the transverse part is offset 20 millimetres from the front surface 62 and the end surface V. In the direction of the centre line S3 of the accommodation member 3 at least the middle of the side edge 61 in the insertion direction is situated beyond the circular abutment edge 23.

In the coupled end position as shown in figure 3B, the free space between the transverse part 21 and the lower side of the insertion end 7 transverse to the centre line S, has a height R that is at least 1/15 of the vertical thickness N. In this example the free space has a height of 5 millimetres.

The distance between the top of the upper curve 33 and the valley of the round surface section 67 of the abutment pins 14 that is farthest from the centre line S along the axial line Q, in this example is 4 millimetres shorter than the distance between the transition 68 and the curve 64 of the accommodation member 3. The lower surface of the transverse part 21 is parallel to the said centre line of the accommodation member 3.

Referring to the figures 1A, 1B, 2A, 2B, 3A and 3B, the operation during a correct coupling of the coupling assembly 1 shown therein will be elucidated.

In figures 1A and 1B the tow hitch member 2 is inserted into the accommodation member 3 with the insertion end 7 in the insertion direction A. The user can do this by placing one hand under the knob 1 5 and the other hand on the tow hitch ball 4. With insertion end 7, the tow hitch member 2 is inserted so far into the accommodation member 3 that transverse pins 14 on both sides (only one side is shown), at the location of the curves 64 just yet fully support on the straight support surfaces 24 of the bearing parts 22.

In the situation shown in figures 1A and 1B the abutment surface 40 of the coupling head 11 has abutted the receding abutment surface 18 of the beam 17. The insertion end 7 is now in the so-called stand-by position, in which the slide rod 10 is retracted in the bore 8, with the head 11 largely within the opening 9, yet in which the slide pin 10 is biassed by the compression spring 13 to a position projecting from the insertion end 7. This is prevented, however, by means of a trigger mechanism that is not further described yet known per se, at the location of the knob 15. Said trigger mechanism operates such that when a force exceeding a certain threshold value is exerted on the coupling head 11, in a direction pressing the compression spring 13 together, the coupling rod 10, after having been pressed in over a distance, is released so that the compression spring 13 is able to push coupling rod 10 with coupling head 11 further to the outside.

At the upper side of the insertion member 7 the short abutment surface 34 at the location of the curve 33 hooks just behind the abutment surface 25 of the upper wall 42. The tow hitch rod 6 thus is in engagement with the accommodation member 3 at three locations, that means at the location of the abutment pins 14 with the support surfaces 24, at abutment surface 40 with abutment surface 18 and at the short abutment surface 34 with abutment surface 25. That condition is a slightly stable condition, the stand-by position which, if so desired, can be lifted by further engagement of the tow hitch member 2 for completing the coupling action. On the other hand the tow hitch member 2 can then still be retracted without operation of the knob 15 being necessary. Due to the decline of the straight support surface 24 a movement of the pins 24 over the support surface 24 in the insertion direction A and thus reaching the stable supportive condition is enhanced. In the stable stand-by position the tow hitch member 2 can be released without it dropping out of the accommodation member 3.

When the user wishes to effect actual coupling, a downward force F can simply be exerted on the tow hitch ball 4, resulting in the abutment pins 14, as shown in figure 2B, sliding in the direction B over the support surface 24, towards the circular abutment edge 23. Due to the vertical direction of the force F a tilting moment C will also be exerted on the tow hitch member 2, as a result of which the tow hitch member 2 will rotate in the direction G about the centre line of the abutment pins 14. The abutment surface 40 will slide upward in the direction E along the abutment surface 18, wherein as a result of the backward inclination thereof the coupling head 11 will be pushed in, in the direction D, counter the spring force of the compression spring 13. As a result of the tilting moment C, the abutment surfaces 34 and 35 will also move upward in the direction E, wherein abutment surface 35 via the short abutment surface 34 will come to lie over a larger surface along the long abutment surface 25. Due to the diagonal orientation of said surfaces with respect to the insertion direction A, the insertion member 7 itself will reliably be pulled further into accommodation space 3 as of its own accord.

The trigger mechanism is adjusted such with respect to the motion of the coupling rod 10 that when the abutment pins 14 abut the circular abutment surface 23, as shown in figures 3A and 3B, and the coupling head 11 with nose surface 39 has arrived at the location of coupling surface 19, the trigger mechanism will have been released, so that the compression spring 13 extends the coupling rod 10 and is able to exert influence. The transition edge of the nose surface 39 and the locking surface 38 then slide further in the direction H over the coupling surface 19, wherein the insertion member 7 is urged further upwards in the direction E.

Subsequently run-on surface 37 and the coupling surface 19 (that are almost parallel then) slide over each other in direction H, as a result of which the insertion member 7 is urged further upward in the direction E. The orientation of the said surfaces is such that also the abutment surfaces 25 and 35 slide along each other, and a tight, play-proof fit is achieved, when the coupling rod 10 is fully extended. The situation shown in the figures 3A and 3B is then achieved, in which the insertion end 7 of the hitch member 2 is reliably clamped in the accommodation member 3, and the centre line Y of the neck 5 is oriented vertically. In this position the cooperations between the abutment pins 14 and circular bearing surface 23, the (wedge) surfaces 19 and 37 and the (wedge) surfaces 25 and 35 ensure a fixed clamping. Thus a type of three-point support is achieved. The compression spring 13 here ensures forceful maintenance of this connection. The locking surface 38 now forms a downward abutment surface that is almost parallel to surface 20 and forms an extra locking means in case of inadvertent backward movement of the coupling rod 10.

The trigger mechanism is adapted such that the biassed coupling rod 10 after release of the mechanism is able to move over a short safety or wear track T that is absolutely bounded to the inside with respect to the insertion end 7. As a result of wear of the (wedge) surfaces 19 and 37, and the (wedge) surfaces 25 and 35, the coupling rod 10 will in the long run come into a further projecting locking position. In the locking position that is absolutely bounded to the inside, so at the start of the safety track, the coupling head 11 always sufficiently projects to maintain the coupling.

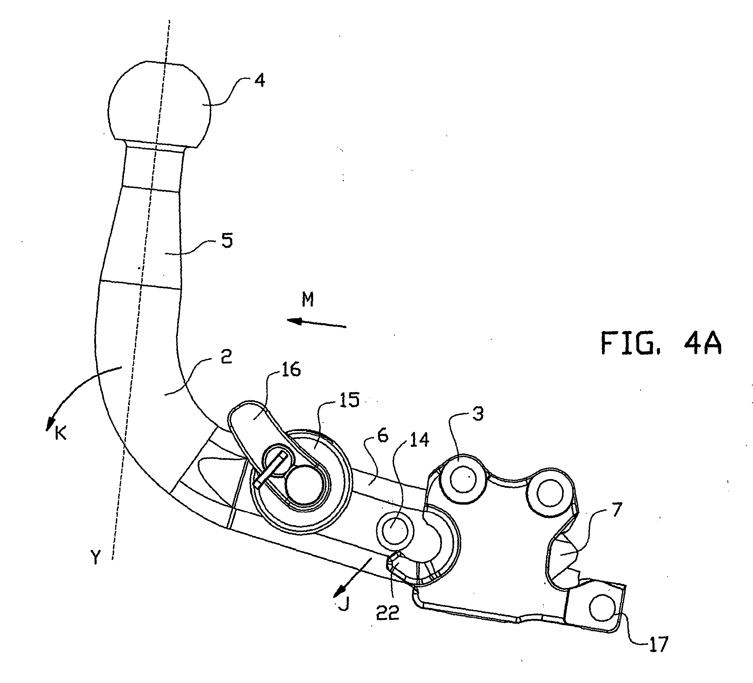

For the desired uncoupling, the operation knob 15 can be engaged and rotated in the manner known per se, in order to retract the coupling rod 10 so that the head 11 is largely retracted into the opening 9 in the bore 8. With an upward force on the tow hitch ball 4, while retracting the tow hitch member 2 in a direction opposite the direction A, the insertion member 7 can be pulled out of the accommodation member 3. Referring to figures 4A-7B a number of examples are given in which the tow hitch member 2 is inserted incorrectly into the accommodation member 3, resulting in it being clearly perceivable that an incorrect coupling has been effected. The examples can be individual situations, but the positions shown can also change into one another, as described below.

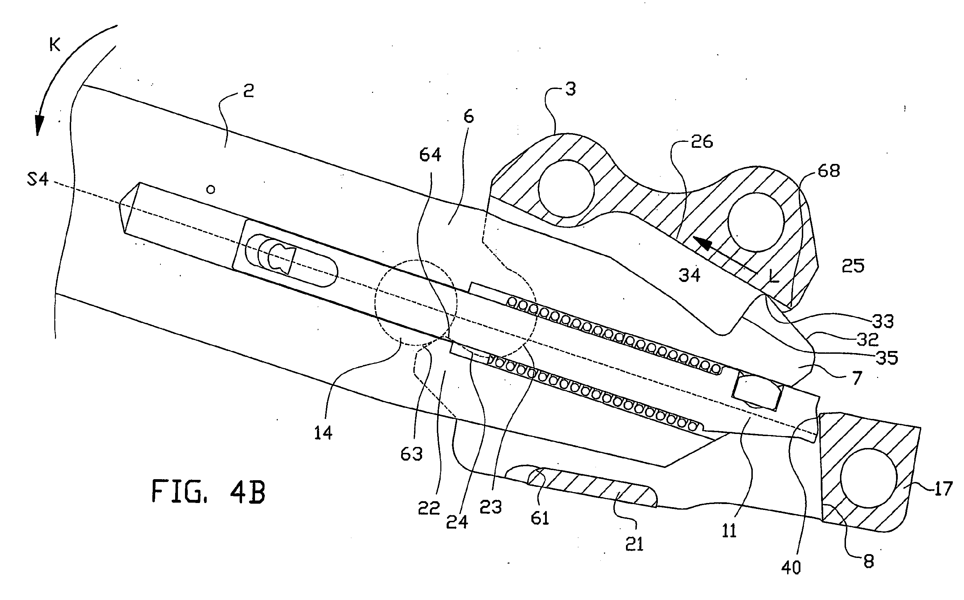

**In** figures 4A and 4B the insertion end 7 is inserted in the insertion direction A into the accommodation member 3, however inadvertently with an already activated trigger mechanism. The coupling head 11 that is in its ultimate position then abuts abutment surface 18, as a result of which the abutment pins 14 at a maximum will come to lie up to the middle of the slide-off surfaces 63. Also by pressing in direction A, in which the coupling rod 10 moves over the bounded safety track T, the abutment pins 14 at a maximum will come up to the middle of the slide-off surfaces 18.

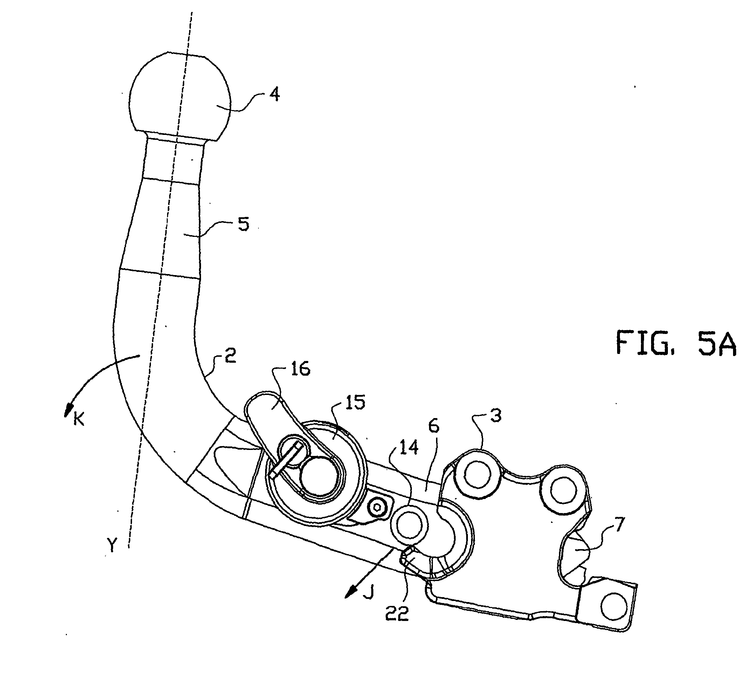

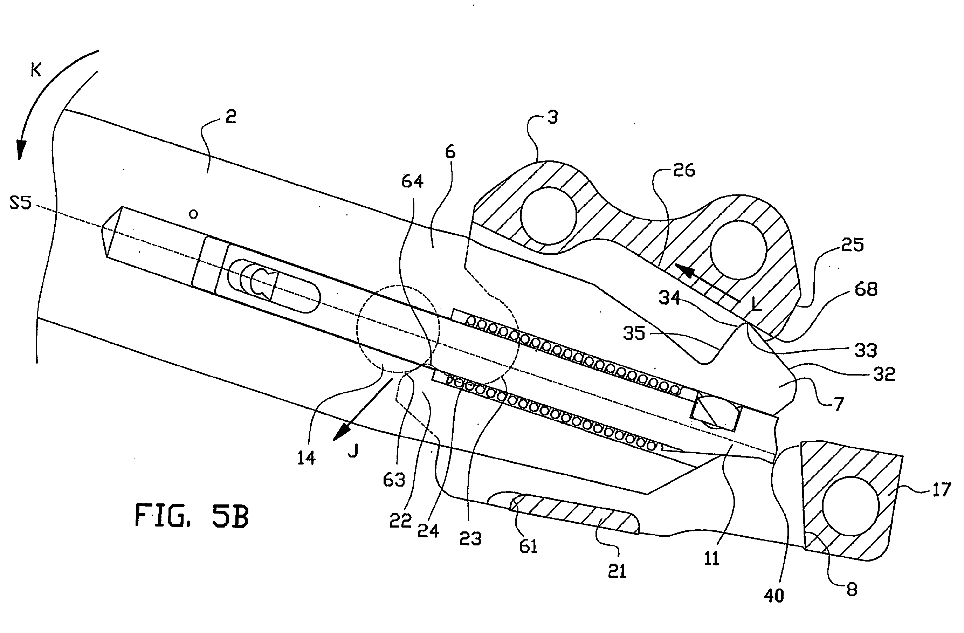

In figures 5A and 5B the insertion end 7 with the trigger mechanism in the correct position is inserted into the accommodation member 3, however not deeply enough to bring the transverse pins 14 beyond the curves 64 on the straight support surfaces 23. As a result the engagement surfaces 25 and 34 are not abutting.

Due to the tow hitch member's 2 own weight it slides back in both cases, wherein the transverse pins 14 slide back in the direction J over the slide-off surfaces 63 of the bearing parts, and the upper curve 33 of the insertion end in direction L over the guide surfaces 26, 27, 28 of the accommodation member 3. The tow hitch member 2 then makes a downward tilting motion K. During contact between the transverse pins 14 and the bearing parts 22 the offset transverse part 21 cannot come into contact with the lower side of the tow hitch rod 6 or not until a later stage.

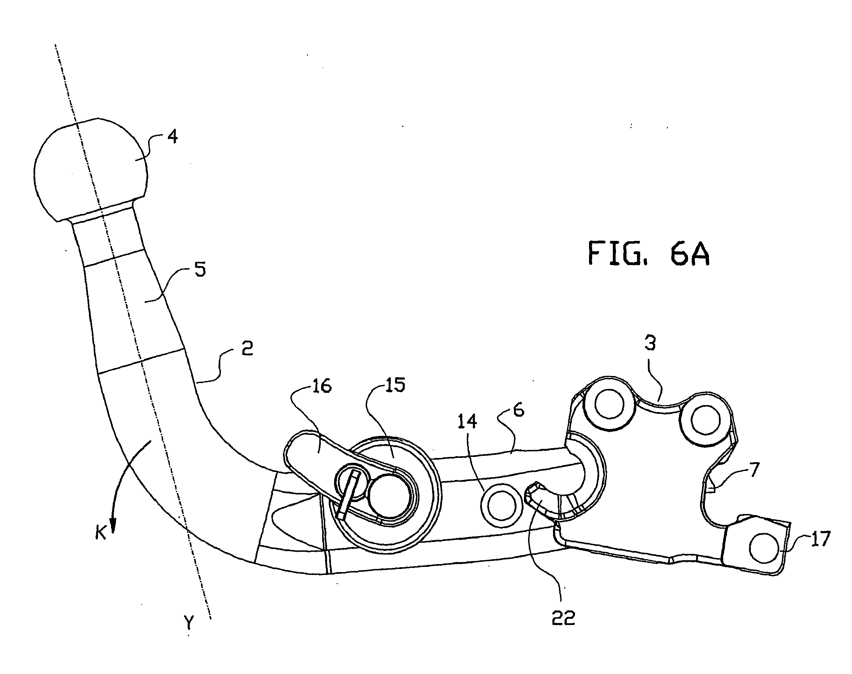

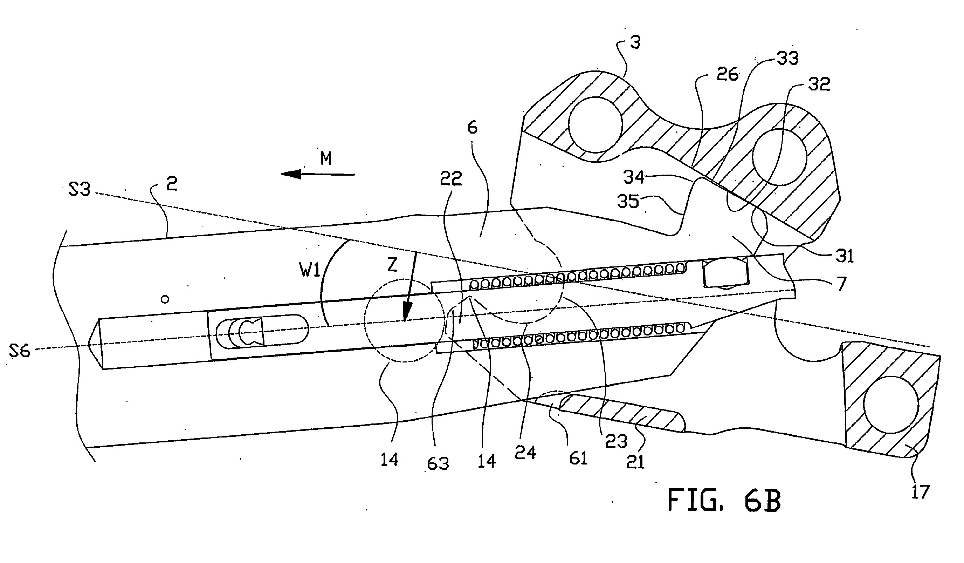

The tow hitch member 2 can, as also shown for both cases in figures 6A and 6B, tilt through in the direction K, wherein the transverse pins 14 become detached from the bearing parts 22. The centre line S6 will be at an angle W1 to the centre line S3 of the accommodation member 3. In this orientation as well the tow hitch member 2 cannot remain hanging stably in the accommodation member 3, because the tow hitch rod 6 due to the offset position of the transverse part 21 cannot be supported anywhere, except optionally by the user who feels the tow hitch member resting in his hands.

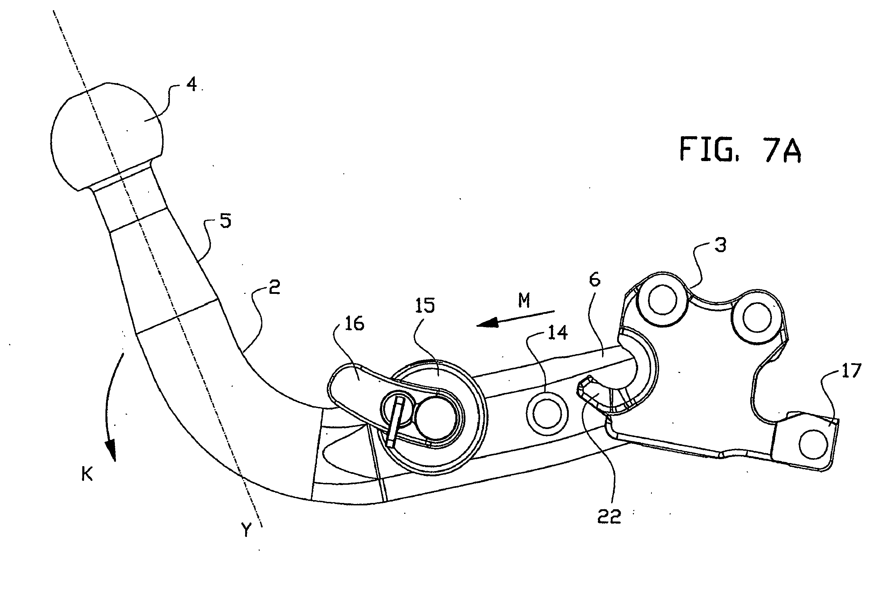

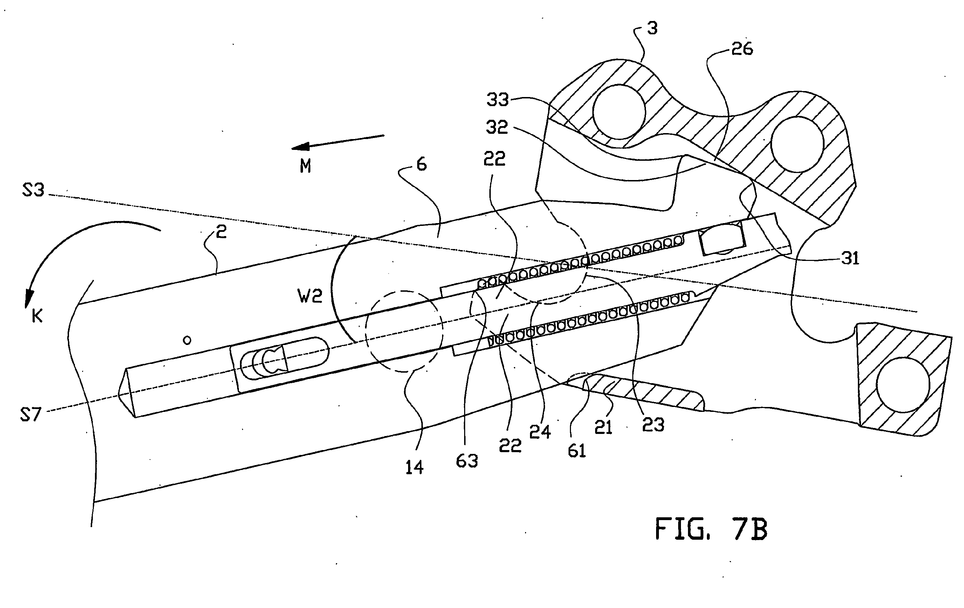

In case of tilting through further in direction K, as shown in figures 7A and 7B, the tow hitch member 2 will be able to move until fully out of the accommodation member 3. The transverse part 21 is positioned offset such that the side edge 61 may act as a guide that will guide the tow hitch member 2 in direction M out of the accommodation member 3 due to the effect of gravity. The curve 61 has a relation in shape with the roundness of the lower side of the insertion end 7 as a result of which guidance is enhanced.

The contact between the lower side of the insertion end 7 and the transverse part 21 takes place when the centre line S7 of the insertion end 7 is at an angle W2 of at least 20 degrees, in this example 30 degrees, to the centre line S3 of the accommodation member 3. Until the mutual contact the insertion end 7 has the freedom to move with the abutment pins 14 over a track Z that is oriented substantially or purely perpendicular to the centre line S3 of the accommodation member 3. Alternatively formulated the insertion member 7, until contacting the transverse part 21, has the freedom to move with the abutment pins 14 over track that is oriented substantially or purely perpendicular to the centre line S3 of the accommodation member 3 whereas the abutment pins 14 are still in contact with the bearing parts 22 over at least a part of said track.

Due to the length X and the diagonal position of the offset surface 32 with respect to the centre line S of the tow hitch rod 6, inside the accommodation member 3 a stopping friction moment can hardly be exerted on the tow hitch member 2 in order to retain it within the accommodation member 3. The tow hitch member 2 will drop on the ground, also when it might be let go off by the user.

In the examples described the user, due to the moving back or feeling the tow hitch member 2 rest in his hand, will clearly notice that the tow hitch is not properly attached behind the vehicle. The transition from the sliding condition according to figures 5A and 5B, and the stable stand-by position according to figures 1A and 1B is a stroke of a few millimetres in the insertion direction. Between these two positions the user feels a clear hopping motion on the tow hitch member 2, wherein the ball 4 moves briefly upwards in order to subsequently, when the transverse pins 14 have slid over the curves 64, via the stand-by position get into the locked position.

## Claims

1. Coupling assembly (1) for a vehicle, comprising a first coupling member (2) provided with a connection part (4) for/towards a trailer or an accessory, and a second coupling member (3) attachable to the vehicle with which second coupling member the first coupling member can be detachably coupled in a coupling position for connection to the vehicle, wherein the first coupling member (2) comprises a rod-shaped insertion end (7) having a first centre line (S3), and the second coupling member (3) comprises a socket (3) having an access opening (50) for accommodation of the insertion end, a first boundary (61) of the access opening (50) situated at a lower side of the socket (3), which first boundary (61) is the side edge of a transverse part (21) at the lower side of the socket (3), and a second boundary (62) of the access opening (50) situated at an upper side of the socket (3), which second boundary (62) is the front surface (62) of the socket situated along the insertion opening (50), **characterized in that** in the mounted condition of the second coupling member (3) to the vehicle the first boundary (61) with respect to the second boundary (62) is situated offset towards the vehicle in the direction of the first centre line (S3) in the coupling position.

2. Coupling assembly according to claim 1, wherein the second boundary (62) defines an end face (V) of the second coupling member (3) situated along the access opening (50), and wherein in the direction of the first centre line (S3) in the coupling position towards the vehicle, the first boundary (61) is situated offset with respect to said end face (V).

3. Coupling assembly (1) according to claim 1 or 2, wherein in the direction of the first centre line (S3) in the coupling position, at least a part of the first boundary (61) is situated offset from the second boundary (62) or end face (V) over a distance that is at least 1/4, preferably at least 1/3 of the vertical thickness of the insertion end (7) in the coupling position at the location of the accommodation opening (50).

4. Coupling assembly (1) according to any one of the preceding claims, wherein the first boundary (61) is situated offset from the second boundary or end face (V) over a distance of at least 15 millimetres.

5. Coupling assembly (1) according to any one of the preceding claims, wherein the first boundary (61) in the direction transverse to the first centre line (S3) in the coupling position, in the coupling position is spaced apart from the insertion end (7) over a distance that is at least 1/15, preferably at least 1/10 of the vertical thickness of the insertion end (7) in the coupling position at the location of the accommodation opening (50).

6. Coupling assembly (1) according to any one of the preceding claims, wherein the first boundary (61) in the direction transverse to the first centre line (S3) in the coupling position, in the coupling position is spaced apart from the insertion end (7) over a distance of at least 4 millimetres.

7. Coupling assembly (1) according to any one of the preceding claims, wherein the first boundary (61) in the coupling position is spaced apart from the insertion end (7), wherein the first boundary (61) allows a swinging motion of the first coupling member (2) with respect to the second coupling member (3) with an angle between the first centre line (S3) in the coupling position and the first centre line (S6; S7) in the swinging position of at least 20 degrees, preferably at least 30 degrees.

8. Coupling assembly (1) according to any one of the preceding claims, wherein the first coupling member (2) comprises first coupling means situated offset opposite the insertion direction (A) and having a first abutment surface (14), and the second coupling member (3) comprises second coupling means (22) having a second abutment surface (23, 24, 63, 64) located at the access opening (50) for cooperation with the first abutment surface, wherein in the mounted condition of the second coupling member (3) to the vehicle the first boundary (61) of the access opening at a lower side of the socket with respect to the second abutment surface (23, 24, 63, 64) in the direction of the first centre line (S3) in the coupling position, is situated offset towards the vehicle, wherein preferably at least a part of the first boundary (61) in the direction of the first centre line (S3) in the coupling position is situated entirely beyond the second abutment surface (23, 24, 63, 64).

9. Coupling assembly (1) according to claim 7 and 8, wherein the first boundary (61) in the coupling position is spaced apart from the insertion end (7), wherein the first boundary (61) allows a swinging motion of the first coupling member (2) with respect to the second coupling member (3) with the first coupling means (14) moving according to a straight path extending substantially transverse to the first centre line (S3) in the coupling position, wherein there is preferably contact between first and second coupling means (14; 22) over at least a part of the straight path (Z).

10. Coupling assembly (1) according to any one of the preceding claims, wherein the first boundary (61) extends between two side walls (66) of the socket (3), wherein the first boundary (61) is situated further offset in the middle than at the side walls (66) of the socket, wherein, preferably, because of a bent or curved edge (61) of the socket the first boundary (61) is situated further offset in the middle than at the side walls (66) of the socket, wherein preferably the shape of the bent or curved edge (61) has a relation in shape with a curve of the insertion end in a cross-section transverse to the first centre line (S3).

11. Coupling assembly (1) according to any one of the preceding claims, wherein the socket (3) comprises a bottom wall (21) defining the first boundary (61).

12. Coupling assembly (1) according to any one of the preceding claims, wherein the first coupling member comprises first coupling means situated offset opposite the insertion direction (A) and having a first abutment surface (14), and the second coupling member (3) comprises second coupling means (22) having a second abutment surface (23, 24, 63, 64) located at the access opening (50) for cooperation with the first abutment surface (14), wherein the first coupling member (2) furthermore comprises third coupling means (35) situated at the insertion end (7) and having a third abutment surface (32-35), and the second coupling member (3) comprises fourth coupling means (25) having a fourth abutment surface (25, 26, 68) for cooperation with the third abutment surface, wherein the first abutment surface comprises a first curve or buckle (14) which defines a section of the first abutment surface which in downward direction is situated farthest from the first centre line (S3) in the coupling position, the second abutment surface comprises a second curve or buckle (64) which at a free end of the second coupling means defines a section which in upward direction is situated closest to the first centre line (S3) in the coupling position, the third abutment surface comprises a third curve or buckle (33) which defines a section of the third abutment surface which in upward direction is situated farthest from the first centre line in the coupling position, and the fourth abutment surface comprises a fourth curve or buckle (68) which comprises a section of the fourth abutment surface that is situated closest to the first centre line (S3) in the coupling position, wherein the distance between the first and the third curve or buckle (14; 33) is adapted to the distance between the second and fourth curve or buckle (64; 68) for a stable support of the first coupling member (2) until reaching a stand-by position preceding the coupling position over a stable insertion track (A) having a length of one or a few millimetres.

13. Coupling assembly (1) according to any one of the preceding claims, wherein the first coupling member (2) comprises third coupling means (35) situated at the insertion end (7) and having a third abutment surface (32-35), and the second coupling member (3) comprises fourth coupling means (25) having a fourth abutment surface (25, 26, 68) for cooperation with the third abutment surface, wherein the third abutment surface with respect to the first centre line (S3) comprises a first surface section (35) sloping upwards in insertion direction (A), which surface section over a third curve or buckle (33) merges into a second surface section (32) sloping diagonally downwards in insertion direction (A), wherein preferably the first diagonally upwardly sloping surface section (35) and the second diagonally downwardly sloping surface section (32) have a comparable length in the direction of the first centre line (S3).

14. Coupling assembly (1) according to claim 13, wherein the second diagonally downwardly sloping surface section (32) is substantially straight and has a length that is at least five times larger than the radius of the third curve (33).

15. Coupling assembly (1) according to claim 9 or 10, wherein the second diagonally downwardly sloping surface section (32) is substantially straight and has a length that is at least five times larger than the distance between the transitions from the first surface section (35) and the second surface section (32) to the third curve (33), and/or wherein the second surface section (32) is substantially straight and is at an angle of 25-35 degrees to the first centre line (S3).

## Patentansprüche

1. Kupplungsanordnung (1) für ein Fahrzeug, umfassend ein erstes Kupplungselement (2), das mit einem Verbindungsteil (4) für/in Richtung auf einen Anhänger oder ein Zubehörteil versehen ist, und ein zweites Kupplungselement (3), das an dem Fahrzeug zu befestigen ist, wobei das erste Kupplungselement in einer Kupplungsposition zur Verbindung an das Fahrzeug lösbar an das zweite Kupplungselement angekuppelt werden kann, wobei das erste Kupplungselement (2) ein stabförmiges Einführende (7) mit einer ersten Mittellinie (S3) aufweist und das zweite Kupplungselement (3) eine Buchse (3) mit einer Zugangsöffnung (50) zur Aufnahme des Einführendes, eine erste Begrenzung (61) der Zugangsöffnung (50), die sich an einer unteren Seite der Buchse (3) befindet, wobei die erste Begrenzung (61) der Seitenrand eines Querteils (21) an der unteren Seite der Buchse (3) ist, und eine zweite Begrenzung (62) der Zugangsöffnung (50), die sich an einer oberen Seite der Buchse (3) befindet, wobei die zweite Begrenzung (62) die Vorderfläche (62) der Buchse ist, die sich entlang der Einführöffnung (50) befindet, aufweist, **dadurch gekennzeichnet, dass** sich im angebrachten Zustand des zweiten Kupplungselements (3) an dem Fahrzeug die erste Begrenzung (61) bezogen auf die zweite Begrenzung (62) in der Richtung der ersten Mittellinie (S3) in der Kupplungsposition auf das Fahrzeug hin versetzt befindet.

2. Kupplungsanordnung nach Anspruch 1, wobei die zweite Begrenzung (62) eine Endfläche (V) des zweiten Kupplungselements (3) definiert, die sich entlang der Zugangsöffnung (50) befindet, und wobei sich die erste Begrenzung (61) bezogen auf die Endfläche (V) in der Richtung der ersten Mittellinie (S3) in der Kupplungsposition auf das Fahrzeug hin versetzt befindet.

3. Kupplungsanordnung (1) nach Anspruch 1 oder 2, wobei sich in der Richtung der ersten Mittellinie (S3) in der Kupplungsposition zumindest ein Teil der ersten Begrenzung (61) über einen Abstand, der mindestens 1/4, vorzugsweise mindestens 1/3 der vertikalen Dicke des Einführendes (7) in der Kupplungsposition an dem Ort der Aufnahmeöffnung (50) ist, versetzt von der zweiten Begrenzung (62) oder Endfläche (V) befindet.

4. Kupplungsanordnung (1) nach einem der vorstehenden Ansprüche, wobei sich die erste Begrenzung (61) über einen Abstand von mindestens 15 Millimetern versetzt von der zweiten Begrenzung oder Endfläche (V) befindet.

5. Kupplungsanordnung (1) nach einem der vorstehenden Ansprüche, wobei die erste Begrenzung (61) in der Richtung quer zu der ersten Mittellinie (S3) in der Kupplungsposition in der Kupplungsposition über einen Abstand, der mindestens 1/15, vorzugsweise mindestens 1/10 der vertikalen Dicke des Einführendes (7) in der Kupplungsposition an dem Ort der Aufnahmeöffnung (50) ist, von dem Einführende (7) beabstandet ist.

6. Kupplungsanordnung (1) nach einem der vorstehenden Ansprüche, wobei die erste Begrenzung (61) in der Richtung quer zu der ersten Mittellinie (S3) in der Kupplungsposition in der Kupplungsposition über einen Abstand von mindestens 4 Millimetern von dem Einführende (7) beabstandet ist.

7. Kupplungsanordnung (1) nach einem der vorstehenden Ansprüche, wobei die erste Begrenzung (61) in der Kupplungsposition von dem Einführende (7) beabstandet ist, wobei die erste Begrenzung (61) eine Schaukelbewegung des ersten Kupplungselements (2) bezogen auf das zweite Kupplungselement (3) mit einem Winkel zwischen der ersten Mittellinie (S3) in der Kupplungsposition und der ersten Mittellinie (S6; S7) in der Schaukelposition von mindestens 20 Grad, vorzugsweise mindestens 30 Grad zulässt.

8. Kupplungsanordnung (1) nach einem der vorstehenden Ansprüche, wobei das erste Kupplungselement (2) erste Kupplungsmittel umfasst, die sich entgegengesetzt der Einführrichtung (A) versetzt befinden, und eine erste Anschlagfläche (14) aufweist, und wobei das zweite Kupplungselement (3) zweite Kupplungsmittel (22) umfasst, die eine zweite Anschlagfläche (23, 24, 63, 64) aufweisen, die sich zur Zusammenwirkung mit der ersten Anschlagfläche an der Zugangsöffnung (50) befinden, wobei sich im befestigten Zustand des zweiten Kupplungselements (3) an dem Fahrzeug die erste Begrenzung (61) der Zugangsöffnung an einer Unterseite der Buchse bezogen auf die zweite Anschlagfläche (23, 24, 63, 64) in Richtung der ersten Mittellinie (S3) in der Kupplungsposition auf das Fahrzeug hin versetzt befindet, wobei sich vorzugsweise mindestens ein Teil der ersten Begrenzung (61) in der Richtung der ersten Mittellinie (S3) in der Kupplungsposition vollständig jenseits der zweiten Anschlagfläche (23, 24, 63, 64) befindet.

9. Kupplungsanordnung (1) nach Anspruch 7 und 8, wobei die erste Begrenzung (61) in der Kupplungsposition von dem Einführende (7) beabstandet ist, wobei die erste Begrenzung (61) eine Schaukelbewegung des ersten Kupplungselements (2) bezogen auf das zweite Kupplungselement (3) zulässt, wobei sich das erste Kupplungsmittel (14) gemäß einem geraden Weg bewegt, der sich im Wesentlichen quer zu der ersten Mittellinie (S3) in der Kupplungsposition erstreckt, wobei vorzugsweise über mindestens einen Teil des geraden Wegs (Z) Kontakt zwischen dem ersten und zweiten Kupplungsmittel (14; 22) besteht.

10. Kupplungsanordnung (1) nach einem der vorstehenden Ansprüche, wobei sich die erste Begrenzung (61) zwischen zwei Seitenwänden (66) der Buchse (3) erstreckt, wobei sich die erste Begrenzung (61) in der Mitte weiter versetzt als an den Seitenwänden (66) der Buchse befindet, wobei sich wegen eines gebogenen oder gekrümmten Randes (61) der Buchse die erste Begrenzung (61) vorzugweise in der Mitte weiter versetzt als an den Seitenwänden (66) der Buchse befindet, wobei die Form des gebogenen oder gekrümmten Randes (61) vorzugsweise eine Beziehung hinsichtlich der Form mit einer Kurve des Einführendes in einem Querschnitt quer zu der ersten Mittellinie (S3) aufweist.

11. Kupplungsanordnung (1) nach einem der vorstehenden Ansprüche, wobei die Buchse (3) eine Bodenwand (21) umfasst, die die erste Begrenzung (61) definiert.

12. Kupplungsanordnung (1) nach einem der vorstehenden Ansprüche, wobei das erste Kupplungselement erste Kupplungsmittel umfasst, die sich entgegen der Einführrichtung (A) versetzt befinden und eine erste Anschlagfläche (14) aufweisen, und das zweite Kupplungselement (3) zweite Kupplungsmittel (22) mit einer zweiten Anschlagfläche (23, 24, 63, 64) umfasst, die sich zur Zusammenwirkung mit der ersten Anschlagfläche (14) an der Zugangsöffnung (50) befindet, wobei das erste Kupplungselement (2) weiterhin dritte Kupplungsmittel (35) umfasst, die sich an dem Einführende (7) befinden und eine dritte Anschlagfläche (32-35) umfassen und das zweite Kupplungselement (3) vierte Kupplungsmittel (25) mit einer vierten Anschlagfläche (25, 26, 68) zur Zusammenwirkung mit der dritten Anschlagfläche umfasst, wobei die erste Anschlagfläche eine erste Kurve oder Krümmung (14) aufweist, die einen Abschnitt der ersten Anschlagfläche definiert, der sich in Abwärtsrichtung am weitesten von der ersten Mittellinie (S3) in der Kupplungsposition entfernt befindet, die zweite Anschlagfläche eine zweite Kurve oder Krümmung (64) aufweist, die an einem freien Ende der zweiten Kupplungsmittel einen Abschnitt definiert, der sich in Aufwärtsrichtung am nächsten der ersten Mittellinie (S3) in der Kupplungsposition befindet, die dritte Anschlagfläche eine dritte Kurve oder Krümmung (33) umfasst, die einen Abschnitt der dritten Anschlagfläche definiert, der sich in Aufwärtsrichtung am weitesten von der ersten Mittellinie in der Kupplungsposition entfernt befindet, und die vierte Anschlagfläche eine vierte Kurve oder Krümmung (68) umfasst, die einen Abschnitt der vierten Anschlagfläche umfasst, der sich in der Kupplungsposition der ersten Mittellinie (S3) am nächsten befindet, wobei der Abstand zwischen der ersten und der dritten Kurve oder Krümmung (14; 33) für eine stabile Stützung des ersten Kupplungselements (2) an den Abstand zwischen der zweiten und vierten Kurve oder Krümmung (64; 68) angepasst ist, bis über eine stabile Einführspur (A) mit einer Länge von einem oder einigen Millimetern eine Bereitschaftsposition erreicht wird, die der Kupplungsposition vorausgeht.

13. Kupplungsanordnung (1) nach einem der vorstehenden Ansprüche, wobei das erste Kupplungselement (2) dritte Kupplungsmittel (35) aufweist, die sich an dem Einführende (7) befinden und eine dritte Anschlagfläche (32-35) aufweisen, und das zweite Kupplungselement (3) vierte Kupplungsmittel (25) umfasst, die eine vierte Anschlagfläche (25, 26, 68) zur Zusammenwirkung mit der dritten Anschlagfläche aufweisen, wobei die dritte Anschlagfläche bezogen auf die erste Mittellinie (S3) einen ersten Oberflächenabschnitt (35) aufweist, der sich in Einführrichtung (A) nach oben neigt, wobei der Oberflächenabschnitt über eine dritte Kurve oder Krümmung (33) in einen zweiten Oberflächenabschnitt (32) übergeht, der sich in Einführrichtung (A) diagonal nach unten neigt, wobei der erste sich diagonal nach oben neigende Oberflächenabschnitt (35) und der zweite sich diagonal nach unten neigende Oberflächenabschnitt (32) in der Richtung der ersten Mittellinie (S3) vorzugsweise eine vergleichbare Länge aufweisen.

14. Kupplungsanordnung (1) nach Anspruch 13, wobei der zweite sich diagonal nach unten neigende Oberflächenabschnitt (32) im Wesentlichen gerade ist und eine Länge aufweist, die mindestens fünf Mal größer als der Radius der dritten Kurve (33) ist.

15. Kupplungsanordnung (1) nach Anspruch 9 oder 10, wobei der zweite sich diagonal nach unten neigende Oberflächenabschnitt (32) im Wesentlichen gerade ist und eine Länge aufweist, die mindestens fünf Mal größer als der Abstand zwischen den Übergängen von dem ersten Oberflächenabschnitt (35) und dem zweiten Oberflächenabschnitt (32) zu der dritten Kurve (33) ist, und/oder wobei der zweite Oberflächenabschnitt (32) im Wesentlichen gerade ist und sich in einem Winkel von 25-35 Grad zur ersten Mittellinie (S3) befindet.

## Revendications

1. Dispositif d'accouplement (1) pour un véhicule, comprenant un premier organe d'accouplement (2) doté d'une pièce de liaison (4) pour/vers une remorque ou un accessoire, et un second organe d'accouplement (3) à monter sur le véhicule, avec laquel second organe d'accouplement le premier organe d'accouplement peut être accouplé mobile pour être relié au véhicule, dans lequel le premier organe d'accouplement (2) comprend un embout d'insertion (7) en forme de barre avec un premier ligne centrale (S3) et dans lequel le second organe d'accouplement (3) comprend un manchon (3) avec une ouverture d'accès (50) permettant l'insertion de l'embout, une première limite (61) d'ouverture d'accès (50) en partie basse du manchon, quel première limite (61) etant le bord latéral d'une pièce transversale (21) agencée dans la partie basse du manchon (3), et une seconde limite (62) de ouverture d'accès (50) en partie haute du manchon (3), quel seconde limite (62) etant la face frontale (62) du manchon le long de l'ouverture d'insertion (50), **caractérisé en ce que**, lorsque le second organe d'accouplement (3) est fixé au véhicule, la première limite (61) est décalée par rapport à la seconde limite (62) vers du véhicule en direction du premier ligne centrale (S3) en position d'accouplement.

2. Dispositif d'accouplement selon la revendication 1, dans lequel la seconde limite (62) définit une surface d'extrémité (V) de la seconde organe d'accouplement (3) le long de l'ouverture d'accès (50), et dans lequel, vers du véhicule, en direction du premier ligne centrale (S3) en position d'accouplement, la première limite (61) est décalée par rapport à ladite surface d'extrémité (V).

3. Dispositif d'accouplement (1) selon la revendication 1 ou 2, dans lequel au moins une partie de la première limite (61) est décalée par rapport à la seconde limite (62) ou surface d'extrémité (V), en direction du premier ligne centrale (S3) en position d'accouplement, sur une distance au moins à un quart, de préférence au moins à un tiers, de l'épaisseur verticale de l'embout d'insertion (7) en position d'accouplement, à la position de l'ouverture d'accomodation (50).

4. Dispositif d'accouplement (1) selon l'une quelconque des revendications précédentes, dans lequel la première limite (61) est décalée par rapport à la seconde limite ou surface d'extrémité (V) sur une distance au moins à 15 millimètres.

5. Dispositif d'accouplement (1) selon l'une quelconque des revendications précédentes, dans lequel la première limite (61) est, en position d'accouplement, espacée de l'embout d'insertion (7), dans le sens transversale au premier ligne centrale (S3) en position d'accouplement, sur une distance correspondant au moins à 1/15, de préférence au moins à 1/10 de l'épaisseur verticale de l'embout d'insertion (7) en position d'accouplement, à la position de l'ouverture d'accomodation (50).

6. Dispositif d'accouplement (1) selon l'une quelconque des revendications précédentes, dans lequel la première limite (61), en position d'accouplement, est espacée de l'embout d'insertion (7), dans le sens transversale au premier ligne centrale (S3) en position d'accouplement, sur une distance au moins à 4 millimètres.

7. Dispositif d'accouplement (1) selon l'une quelconque des revendications précédentes, dans lequel, la première limite (61) étant, en position d'accouplement, espacée de l'embout d'insertion (7), ladite première limite (61) permet au premier organe d'accouplement (2) d'effectuer un mouvement oscillant par rapport au second organe d'accouplement (3), selon un angle d'au moins 20 degrés, de prérérence d'au moins 30 degrés, décrit entre le premier ligne centrale (S3) en position d'accouplement et le premier ligne centrale (S6 ; S7) en position d'oscillation.

8. Dispositif d'accouplement (1) selon l'une quelconque des revendications précédentes, dans lequel le premier organe d'accouplement (2) comporte un premier moyen d'accouplement située décalé dans la direction inverse à celle d'insertion (A) et présentant une première face de butée (14), et le second organe d'accouplement (3) comporte un deuxième moyen d'accouplement (22) présentant une deuxième face de butée (23, 24, 63, 64) située au niveau de l'ouverture d'accès (50) afin de coopérer avec la première face de butée, et dans lequel, lorsque le second organe d'accouplement (3) est fixé au véhicule, la première limite (61) de l'ouverture d'accès (50), située en partie basse du manchon, est décalée par rapport à la seconde face de butée (22, 24, 63, 64), en direction du premier ligne centrale (S3) en position d'accouplement vers du vehicule, et dans lequel une partie au moins de la première limite (61), en direction du premier ligne centrale (S3) en position d'accouplement, se trouve entièrement au-delà de la seconde face de butée (23, 24, 63, 64).

9. Dispositif d'accouplement (1) selon les revendications 7 et 8, dans lequel, la première limite (61) étant, dans la position d'accouplement, espacée de l'embout d'insertion (7), dans lequel ladite première limite (61) permet au premier organe d'accouplement (2) d'effectuer un mouvement oscillant par rapport au second organe d'accouplement (3), le premier moyen d'accouplement (14) se déplace en suivant une ligne droite (Z) essentiellement transversale au premier ligne centrale (S3) en position d'accouplement, moyennant quoi les premier et second moyens (14 ; 22) d'accouplement sont, de préférence, en contact sur au moins une partie de ladite ligne droite (Z).

10. Dispositif d'accouplement (1) selon l'une quelconque des revendications précédentes, dans lequel la première limite (61) s'étend entre deux parois latérales (66) du manchon (3), dans lequel la première limite (61) est située plus décalée au milieu qu'au niveau des parois latérales (66) dudit manchon et dans lequel, de préférence, en raison du bord courbe (61) du manchon, la forme dudit bord courbe (61) correspondant, de préférence, à la forme courbe de l'embout d'insertion (7), vu en coupe transversale par rapport au premier ligne centrale (S3).

11. Dispositif d'accouplement (1) selon l'une quelconque des revendications précédentes, dans lequel le manchon (3) comprend une paroi de fond (21) qui définit la première limite (61).

12. Dispositif d'accouplement (1) selon l'une quelconque des revendications précédentes, dans lequel le premier organe d'accouplement comporte un premier moyen d'accouplement décalé dans la direction inverse à celle d'insertion (A) et présentant une première face de butée (14), dans lequel le second organe d'accouplement (3) comporte un deuxième moyen d'accouplement (22) présentant une deuxième face de butée (23, 24, 63, 64) située au niveau de l'ouverture d'accès (50) afin de coopérer avec la première face de butée (14), dans lequel en outre le premier organe d'accouplement (2) comporte un troisième moyen d'accouplement (35) agencé au niveau de l'embout d'insertion (7) et présentant une troisième face de butée (32-35), et le second organe d'accou-plement (3) comporte un quatrième moyen d'accouplement (25) présentant une quatrième face de butée (25, 26, 68) afin de coopérer avec la troisième face de butée, dans lequel la première face de butée (14) comprend une première courbe ou boucle (14) définit une section de ladite première face de butée qui, en direction du bas, se situe au plus loin du premier ligne centrale (S3) en position d'accouplement, tandis que la deuxième face de butée comprend une seconde courbe ou boucle (64) qui, au niveau d'une extrémité libre du deuxième moyen d'accouplement, constitue une section qui, en direction du haut, se situe au plus proche du premier ligne centrale (S3) en position d'accouplement, tandis que la troisième face de butée comprend une troisième courbe ou boucle (33) constituant une section de ladite troisième face de butée qui, en direction du haut, se situe au plus loin du premier ligne centrale (S3) en position d'accouplement, tandis que la quatrième face de butée comprend une quatrième courbe ou boucle (68) constituant une section de ladite quatrième face de butée qui se situe au plus proche du premier ligne centrale (S3) en position d'accouplement, la distance entre la première et la troisième courbe ou boucle (14 ; 33) étant en adéquation avec la distance entre la deuxième et la quatrième courbe ou boucle (64 ; 68), afin de soutenir fermement le premier organe d'accouplement (2) jusqu'à ce que celui-ci atteigne une position d'attente précédant la position d'accouplement sur un trajet d'insertion (A) stable d'une longueur d'un ou de quelques millimètres.

13. Dispositif d'accouplement (1) selon l'une quelconque des revendications précédentes, dans lequel le premier organe d'accouplement (2) comporte un troisième moyen d'accouplement (35) agencé au niveau de l'embout d'insertion (7) et présentant une troisième face de butée (32-35), et le second organe d'accouplement (3) comporte un quatrième moyen d'accouplement (25) présentant une quatrième face de butée (25, 26, 68) afin de coopérer avec la troisième face de butée (32-35), et dans lequel la troisième face de butée comprend une première portion (35) qui, par rapport au premier ligne centrale (S3), est inclinée en diagonale vers le haut dans la direction d'insertion (A), ladite portion de surface (35) aboutissant, à travers une troisième courbe ou boucle (33), dans une seconde portion de surface (32) inclinée en diagonale vers le bas dans la direction d'insertion (A), ladite première (35) et ladite seconde (32) portion de surface ayant une longueur comparable dans le sens du premier ligne centrale (S3).

14. Dispositif d'accouplement (1) selon la revendication 13, dans lequel la seconde portion de surface (32) inclinée en diagonale vers le bas est principalement droite et présente une longueur au moins cinq fois supérieure au rayon de la troisième courbe (33).

15. Dispositif d'accouplement (1) selon la revendication 9 ou 10, dans lequel la seconde portion de surface (32) inclinée en diagonale vers le bas est principalement droite et présente une longueur au moins cinq fois supérieure à la distance entre les transitions de la première (35) et de la seconde (32) portion de surface jusqu'à la troisième courbe (33) et/ou dans lequel la seconde portion de surface (32) est principalement droite et disposée selon un angle de 25 à 35 degrés par rapport au premier ligne centrale (S3).
